# EUROPÄISCHE PATENTANMELDUNG

(11) **EP 1 798 357 A1**
(43) Veröffentlichungstag der Anmeldung: **20.06.2007**
(21) Anmeldenummer: 06024594.1
(22) Anmeldetag: 28.11.2006
(51) Int. Cl.: E04D 1/30, H01L 31/048

(54) **Halterung für Gegenstände aller Art, insb. von Solarmodulen oder Photovoltaikanlagen, auf Ziegeldächern**

(30) Priorität: 13.12.2005 DE 202005019628 U; 18.04.2006 DE 202006006291 U; 17.09.2006 DE 202006014470 U
(71) Anmelder: IDEEMATEC Deutschland GmbH, 94574 Wallerfing (DE)
(72) Erfinder: Kufner, Johann, 94527 Aholming/Tabertshausen (DE)

(57) **Zusammenfassung**

Halterung für Gegenstände aller Art, insbesondere von Solarmodulen oder Photovoltaikanlagen, auf Ziegeldächern, insbesondere aus Dachpfannenziegeln, bei der mindestens zwei im eingedeckten Zustand in Richtung quer zur Dachbalkenlängserstreckung aufeinanderfolgende Dachziegel, die im Bereich eines Dachbalkens (3) liegen, gegen ein einstückiges Ziegelaustauschteil (1) von im wesentlichen gleicher Flächengröße austauschbar sind, welches im eingedeckten Zustand an mindestens einem stiftförmigen Halteelement (5; 16) verankerbar ist, das an einer Stelle oberhalb eines darunter liegenden Dachbalkens (3) das Austauschteil (1) durchdringend am Dachbalken (3) befestigbar ist, wobei an dem von der Oberseite des Austauschteiles (1) nach oben vorstehenden Kopfende (34) des Halteelementes (5; 16), an dem der zu haltende Gegenstand verankerbar ist, ein das Austauschteil (1) gegen eine Verschiebung nach oben haltendes Widerlager (6 - 8; 14) anbringbar ist. Das stiftförmige Halteelement kann eine Stockschraube (5) sein, deren unterer Abschnitt (4) mit Holzgewinde in den Dachbalken (3) eindrehbar ist, während der obere mit metrischem Gewinde versehene Abschnitt (34) der Stockschraube (5) das Kopfende des Halteelementes bildet und mit einer Montagemutter (14) versehen ist, die zum Eindrehen der Stockschraube (5) dient.

## Beschreibung

Die Erfindung betrifft eine Halterung für Gegenstände aller Art, insbesondere von Solarmodulen oder Photovoltaikanlagen, auf Ziegeldächern, insbesondere auf mit Dachpfannenziegeln eingedeckten Dächern.

Die am Markt bekannten Systeme erfüllen die hohen Anforderungen bezüglich leichter und schneller Montage sowie windsicherer Lagerung bei hoher Belastbarkeit nur teilweise bzw. gar nicht. Bei dem am weitesten verbreiteten System wird ein Metallwinkel verwendet, der an einem tragenden Balken der Dachkonstruktion befestigt wird. Nachdem man die Position des tragenden Balkens ermittelt hat, wird zuerst ein Dachziegel, meist eine Dachpfanne, über der für den Winkel vorgesehenen Befestigungsstelle entfernt. Auf der unter dieser Dachpfanne liegenden tragenden Dachkonstruktion (tragend heißt quer zur Traufe verlaufend) wird nun der Metallwinkel so angeschraubt, dass sein freies Ende über die unterhalb der entfernten Dachpfanne liegenden Dachpfanne ragt. Damit die entfernte Dachpfanne genau in ihre ursprüngliche Lage wieder einsetzbar ist und wasserdicht mit den umgebenden Dachpfannen abschließt, muss nun noch eine Aussparung für den Winkel in die entfernte Dachpfanne geklopft werden, bevor sie wieder eingefügt werden kann. Nach Wiedereinsetzen der entfernten Dachpfanne schaut dann nur noch der überstehende Schenkel des montierten Winkels aus dem Dach heraus. Das Problem bei dieser Montage liegt darin, dass der Winkel umständlich zu montieren ist, vor allem wenn der tragende Dachbalken ungünstig unter dem Rand oder der Erhebung einer Dachpfanne verläuft. Zudem bricht diejenige Dachpfanne, auf welcher der Montagewinkel freitragend aufliegt, sehr leicht auseinander. Meist wird daher mittlerweile eine Blechpfanne anstelle der Dachpfanne, auf welcher der Montagewinkel aufliegt, verlegt. Dennoch ist das System auch mit dieser Maßnahme nicht zu perfektionieren, da es bei Wind im Haus zu Klappergeräuschen kommen kann, weil die montierende Anlage an einem Hebel angebracht ist, der nur an einem Ende am Dach fixiert ist.

Daneben gibt es Halterungen, die das obige Problem des Winkels zu vermeiden suchen. Dazu wird eine sogenannte Stockschraube verwendet, deren einer Abschnitt mit Holzgewinde und deren anderer Abschnitt mit einem metrischen Gewinde versehen ist. Eine derartige Stockschraube findet z.Zt. bei Blechdächern Anwendung, indem der Abschnitt mit Holzgewinde durch eine Bohrung im Blechdach in die tragende Dachkonstruktion eingebohrt wird. Die Abdichtung erfolgt dann mit einer Mutter und einer Dichtung, die auf den Abschnitt mit metrischem Gewinde von oben aufgeschraubt werden. Anschließend wird an diesem Abschnitt der Solarmodul bzw. die Photovoltaikanlage befestigt.
Ein ähnlicher Stand der Technik ist im zweiten Absatz der Spalte 1 der Deutschen Gebrauchsmusterschrift Nr. 202004005224 beschrieben.

Bei Ziegeldächern, insbesondere bei mit Dachpfannenziegeln eingedeckten Dächern, wäre der Einsatz einer Stockschraube wegen ihrer Schnellmontagetechnik sehr wünschenswert, da sie im Vergleich zu einem Befestigungswinkel viel einfacher und schneller zu montieren ist. Allerdings sind noch keine brauchbaren Lösungen am Markt bekannt geworden, da hier das Problem besteht, dass in der Regel der Abstand zwischen den Dachbalken kein ganzzahliges Vielfaches einer Dachziegelbreite ist. Aus diesem Grunde ist es nicht möglich, dass über jedem Dachbalken die Dachziegel in wünschenswerter Weise genau mittig liegen. Gerade diese Lage wäre aber für das Einbohren einer Stockschraube sehr günstig, da die Schraube dann im Mittelbereich des betreffenden Ziegels eingebohrt werden könnte. Allerdings ist es nun in der Praxis so, dass diese mittige Lage schon beim nächstfolgenden Dachbalken nicht eingehalten wird, da hier auf Grund des nicht ganzzahligen Verhältnisses zwischen Dachbalkenabstand und Ziegelbreite z.B. der Überlappungsbereich zweier benachbarter Dachziegel sich mittig über dem Dachbalken befindet. Beim nächsten Dachbalken kann dieser Überlappungsbereich wiederum links oder rechts von der Balkenmitte liegen, was bedingen würde, dass das Einbohren einer Stockschraube am Ziegelrand erfolgen müsste. Dies könnte aber zum Bruch des betreffenden Ziegels führen. Aus diesem Grunde hat sich daher bisher die Anwendung einer Stockschraube bei Ziegeldächern zur Halterung insbesondere von Solarmodulen oder Photovoltaikanlagen nicht bewährt und durchgesetzt.

Der Erfindung liegt die Aufgabe zu Grunde, eine Halterung für Gegenstände aller Art, insbesondere von Solarmodulen oder Photovoltaikanlagen, auf Ziegeldächern, insbesondere auf mit Dachpfannenziegeln eingedeckten Dächern zu schaffen, die den hohen Anforderungen an eine windsichere und hohem statischen Druck ausgesetzte Vorrichtung entspricht, einfach und schnell zu montieren ist sowie die Schwierigkeiten eliminiert, die aus der sich verändernden relativen Dachziegellage über den in Abstand aufeinander folgenden Dachbalken resultieren.

Diese Aufgabe wird durch die im kennzeichnenden Teil des beiliegenden Anspruches 1 beanspruchten Merkmale gelöst.

Da das erfindungsgemäße Ziegelaustauschteil in Richtung quer zur Dachbalkenlängserstreckung gesehen mindesten zwei, beispielsweise auch mehr als zwei aufeinanderfolgende Dachziegel ersetzt, ist es ausgeschlossen, dass der mit den benachbarten Dachziegeln sich überlappende Randbereich dieses Austauschteiles genau über dem betreffenden Dachbalken liegt. Vielmehr befindet sich dieser Überlappungsbereich außerhalb des Dachbalkens, sodass ein durch das Austauschteil in den Dachbalken eingebohrtes stiftförmiges Halteelement, z.B. eine Stockschraube, dieses Austauschteil in einem mittleren oder einen sich an die Randzone anschließenden Bereich durchdringt. Dadurch wird ein Bruch dieses Ziegelaustauschteiles vermieden und eine stabile Halterung desselben erreicht. Da ferner das von der Oberseite des Austauschteiles nach oben vorstehende Kopfende des stiftförmigen Halteelementes als Verankerungsteil für den zu haltenden Gegenstand dient, wird ausschließlich dieses Halteelement belastet, während das Austauschteil wenig belastet wird. Das erfindungsgemäß zusätzlich am Kopfende des Halteelementes angebrachte Widerlager dient dabei lediglich dazu, eine Verschiebung des Austauschteiles noch oben zu verhindern, ohne dass dieses Widerlager einer Lastbeanspruchung seitens des zu haltenden Gegenstandes ausgesetzt ist.

Da bei den meisten Ziegeldächern die Dachbalken von der Traufe zum Dachfirst, also von unten nach oben laufen, während die Dachlatten sich in waagerechter Richtung erstrecken, ersetzt in diesem Falle das erfindungsgemäße einstückige Ziegelaustauschteil mindestens zwei in dieser waagerechten Richtung nebeneinanderliegende Dachziegel. Für den Fall, dass die Dachbalken waagerecht verlaufen sollten, müsste das erfindungsgemäße Ziegelaustauschteil demgemäß mindestens zwei in Richtung von Traufe zu Dachfirst gesehen übereinanderliegende Dachziegel ersetzen.

Die erfindungsgemäße Halterung ist nicht nur bei Ziegeldächern einsetzbar, bei denen keine die Zwischenräume zwischen den Dachbalken abdeckende Dachverschalung vorhanden ist, sondern nur Dachlatten quer zu den Dachbalken verlaufen. Vielmehr kann die Erfindung auch bei Ziegeldächern mit Dachverschalung eingesetzt werden, bei denen die Dachlatten auf dieser Verschalung befestigt sind, da das erfindungsgemäß verwendete stiftförmige Halteelement in diesem letzteren Fall durch die Dachverschalung in den Dachbalken eingetrieben wird.

Bei Verwendung einer Stockschraube als stiftförmiges Halteelement stellen die Maßnahmen gemäß dem beiliegenden Anspruch 2 eine besonders bequeme und schnelle Montage der Stockschraube sicher.

Dabei kann ein kraftsparendes Eintreiben der Stockschraube in den Dachbalken dann erreicht werden, wenn das untere Ende der Stockschraube so ausgebildet ist, wie dies im beiliegenden Anspruch 3 gekennzeichnet ist.

Mit den Merkmalen des Anspruches 4 wird erreicht, dass bei Wind - und / oder Schnee-last das Austauschteil nicht verformt wird, da sich das Gewinde der Stockschraube mit der Wandung des Austauschteiles verkeilt hat.

Eine Möglichkeit, die Montagemutter für den Angriff des Montagewerkzeuges an der Stockschraube zu befestigen, ist im beiliegenden Anspruch 5 beansprucht.

In diesem Falle ist zum Abdichten der Stockschraube eine Dichtung vorgesehen, wie sie im Anspruch 6 beansprucht ist. Da hier die Dichtung gegen die Montagemutter und die Oberseite des Austauschteiles anliegt, erfüllt diese Dichtung die Rolle eines Widerlagers, das eine Verschiebung des Austauschteiles nach oben verhindert. Die Montagemutter braucht demgemäß hier nicht direkt an der Wandung des Austauschteiles anzuliegen, sondern kann in einem gewissen kurzen Abstand davon gehalten sein, was durch das später noch näher beschriebene Montagewerkzeug erreichbar ist.

Alternativ zu der Ausführungsform, die Montagemutter am unteren Ende des metrischen Gewindes zu befestigen, kann gemäß Anspruch 7 die Montagemutter auch bei durch das Austauschteil hindurch und in den Dachbalken fertig eingedrehter Stockschraube in Abstand oberhalb der Oberseite des Austauschteiles fest sitzen, wobei die in diesem Anspruch 7 mitbeanspruchte Dichtung durch die Montagemutter an die Oberseite des Austauschteiles angelegt wird und das Widerlager für letzteres bildet. Auf eine Montagemutter am unteren Ende des metrischen Gewindes der Stockschraube kann hier verzichtet werden. Außerdem erbringt der Gegenstand des Anspruches 7 den Vorteil, dass die Stockschraube zusammen mit der darauf festsitzenden Montagemutter sowie der daran sich anschließenden Beilagescheibe und Dichtung als ein integriertes Bauteil werkseitig angeliefert werden kann, was eine weitere Vereinfachung bei der Montage der erfindungsgemäßen Halterung erbringt.

Die erfindungsgemäß verwendete Stockschraube kann auch durch ein Verankerungsteil ersetzt werden, wie es in Anspruch 8 beansprucht ist. Durch den erfindungsgemäß vorgesehenen stiftförmigen Ansatz an der Unterseite der Grundplatte wird dabei gewährleistet, dass nach Befestigung des Verankerteils am betreffenden Dachbalken das von der Oberseite der Grundplatte nach oben weisende stiftförmige Halteelement passgenau in die vorher vorgebohrte Öffnung im wieder aufgelegten Austauschteil eingeführt und letzteres in seiner ursprünglich eingestellten Stellung befestigt werden kann.

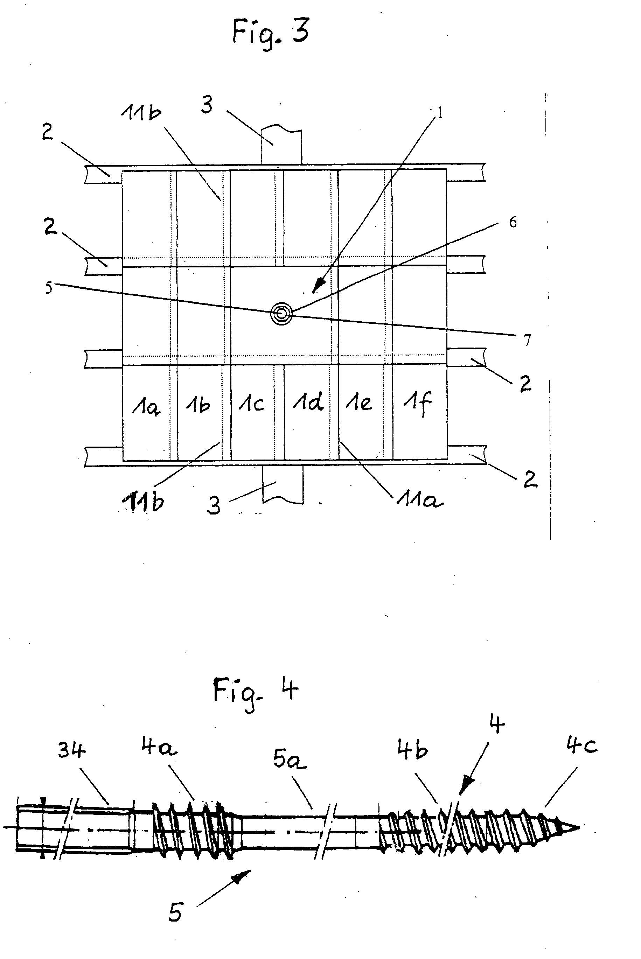

Ein an einem Dachbalken befestigbares Verankerungsteil unter Verwendung von Grundplatten ist zwar aus Figur 3 und dem zugehörigen Beschreibungstext der Deutschen Gebrauchsmusterschrift 202004005224 vorbekannt. Allerdings trägt dieses bekannte Verankerungsteil an der Oberseite der Grundplatten einen Profiladapter zur verschiebbaren Halterung von Solarmodulen und kein stiftförmiges Halteelement wie im beiliegenden Anspruch 8 beansprucht. Auch ist an der Plattenunterseite des bekannten Verankerungsteils überhaupt kein stiftförmiger Ansatz vorhanden, da dasselbe nicht die Aufgabe hat, ein aufgelegtes Ziegelaustauschteil in einer vorher eingestellten Lage zu befestigen. Vielmehr dient das vorbekannte Verankerungsteil dazu, bei einer verschiebbaren Halterung von Solarmodulen diese Halterung in abdichtender Weise mittels einer Dichtungsbahn und einer Dämmschicht am darunter liegenden Dachbalken festzumachen.

Die Gegenstände der Ansprüche 9 und 10 kennzeichnen vorteilhafte Ausführungsformen des Verankerungsteiles gemäß Anspruch 8, wobei die im Anspruch 10 beanspruchte Dichtungsanordnung mit sich bringt, dass die Wandung des Austauschteiles, durch welches sich die Gewindestange hindurch erstreckt, praktisch belastungsfrei bleibt, da sich der Druck der Dichtungen von oben bzw. von unten auf die Wandung gegenseitig kompensiert.

Die Ansprüche 11 und 12 beschreiben zweckmäßige Ausführungsformen eines erfindungsgemäßen Austauschteiles, wobei insbesondere der Gegenstand des Anspruches 12 eine wasserdicht überlappende Anordnung sicherstellt.

In diesem Zusammenhang ergibt die im Anspruch 13 mit beanspruchte Auswölbung der Wandung des das Austauschteil bildenden Formteiles den Vorteil, dass das stiftförmige Halteelement an einer relativ hoch gelegenen Stelle zusätzlich abgestützt ist, woraus eine besonders gute Verankerung dieses Halteelementes resultiert.

Eine solche gute Verankerung wird dadurch begünstigt, wenn, wie im beiliegenden Anspruch 14 beansprucht, das Formteil mit Hilfe eines seitlichen Ansatzes zusätzlich am Dachbalken verankert wird.

Die Ansprüche 15 und 16 beschreiben zusätzliche vorteilhafte Konstruktionsmerkmale eines erfindungsgemäßen Formteiles für das Ziegelaustauschteil.

Um das mit einer Auswölbung versehene Formteil mit Hilfe einer Stockschraube am Dachbalken zu verankern, wird zweckmäßigerweise für diese Stockschraube eine Ausführungsform verwendet, wie sie im Anspruch 17 beschrieben ist und die dem Umstand Rechnung trägt, dass im Inneren der Auswölbung das Holzgewinde der Stockschraube nicht mit der Formteilwandung in Eingriff steht. Der erste obere Holzgewindebereich dient in diesem Zusammenhang dazu, die ebene Oberseite der Auswölbung gegen Belastungen von oben zu stabilisieren und in ihrer Lage zu halten.

Mit den Merkmalen des Anspruches 18 wird eine weitere Möglichkeit der Abstützung des oder jedes stiftförmigen Halteelementes geschaffen, wobei diese Möglichkeit bei einem Ziegelaustauchteil sowohl mit als auch ohne Auswölbung angewendet werden kann.

Wenn das erfindungsgemäße Austauschteil im Vergleich zu den angrenzenden Dachziegeln eine geringere Dicke besitzt, sind gemäß den Ansprüchen 19 und 20 Höhenausgleichselemente vorgesehen, die entweder als an der Randunterseite des Austauschteiles angebrachte getrennte Abstandshalter oder als mit dem Austauschteil einstückige Randvertiefungen ausgeführt sind.

Gemäß Anspruch 21 kann das Austauschteil aus Metallblech, Kunststoff, Schiefer oder Beton bestehen.

In diesem Zusammenhang sei auch bemerkt, dass der Erfindungsgegenstand für alle Arten von Dachziegeln und insbesondere von Dachpfannen verwendbar ist, unabhängig davon, ob die Dachbalken von unten nach oben oder quer dazu in im wesentlichen waagrechter Richtung verlaufen, da die Form des erfindungsgemäßen Ziegelaustauschteiles entsprechend anpassbar ist.

Wenn das Montagewerkzeug zum Eindrehen einer Stockschraube mittels der daran befestigten Montagemutter so ausgebildet ist, wie dies im Anspruch 25 gekennzeichnet ist, ergibt sich der Vorteil, dass die Montagemutter aus dem Aufnahmeteil herausgleitet, wenn das nach unten vorstehende Ende des Abstandhalters auf der Oberseite des Ziegelaustauschteiles dreht. Dadurch bleibt die Montagemutter mit der Stockschraube in einem bestimmten Abstand, der durch die axiale Höhe des Abstandshalters bestimmt ist, über der Oberseite des Austauschteiles stehen, sodass die Wandung des Austauschteiles nicht unnötig nach unten belastet wird. Es kann dann entweder eine weitere Mutter mit Beilagescheibe und Dichtung auf das Kopfende der Stockschraube aufgebracht und in elastisch nachgiebiger Weise gegen das Austauschteil gedrückt werden, sofern die Montagemutter am unteren Ende des metrischen Gewindeabschnittes der Stockschraube festsitzt. Alternativ dazu kann aber auch, wenn die Montagemutter weiter oben am metrischen Gewindeabschnitt der Stockschraube festsitzt, dieselbe direkt dazu verwendet werden, eine sich daran anschließende Beilagescheibe mit Dichtung gegen das Austauschteil anzulegen. Der Druck der Dichtung gegen das Austauschteil wird dabei in diesem Falle durch die axiale Höhe des Abstandshalters am erfindungsgemäßen Montagwerkzeug bestimmt. Durch den Abstandhalter ist in beiden Fällen sichergestellt, dass der untere mit Holzgewinde versehene Abschnitt der Stockschraube an der Durchtrittsöffnung derselben durch das Ziegelaustauschteil mit dessen Wandung in Eingriff kommt und sich mit dieser Wandung verkeilt. Dadurch wird eine einwandfreie Verankerung des Austauschteiles und seiner Wandung an der Stockschraube sichergestellt, ohne dass wesentliche Druckbelastungen das Austauschteil beanspruchen.

Im Folgenden wird die Erfindung in den beiliegenden Zeichnungen auf der Grundlage mehrerer Ausführungsbeispiele noch näher erläutert. Einander entsprechende Teile sind in den Zeichnungen mit den gleichen Bezugszeichen bezeichnet, wobei die Zeichnungsdarstellungen keinesfalls maßstäblich sind. In den Zeichnungen zeigen:
Figur 1 eine erste Ausführungsform einer erfindungsgemäßen Halterung in Seitenansicht in Richtung längs der Dachlatten gesehen,
Figur 2 die Halterung von Figur 1 im Querschnitt in Richtung zum Dachfirst hin gesehen,
Figur 3 eine Draufsicht auf ein Ziegeldach mit der fertig eingedeckten Halterung von Figur 1 bzw. 2,
Figur 4 die Ansicht einer bevorzugten Ausführungsform einer Stockschraube,
Figur 5 eine zweite Ausführungsform einer erfindungsgemäßen Halterung in einer der Figur 1 entsprechenden Darstellung im Querschnitt,
Figur 6 eine Draufsicht auf eine bevorzugte Ausführungsform eines an einem Dachbalken befestigten und auf Dachlatten aufliegenden Ziegelaustauschteiles,
Figur 7 eine Schnittdarstellung längs der Schnittlinie I - I von Figur 6,
Figur 8 eine weitere Schnittdarstellung längs der Schnittlinie II - II von Figur 6,
Figur 9 eine Seitenansicht einer erfindungsgemäßen Halterung in Richtung längs der Dachlatten gesehen mit einer zusätzlichen Abstützung der verwendeten Stockschraube durch ein Flacheisen, und
Figur 10 ein erfindungsgemäßes Montagewerkzeug im Querschnitt zum Eindrehen einer mit einer festsitzenden Montagemutter versehenen Stockschraube.

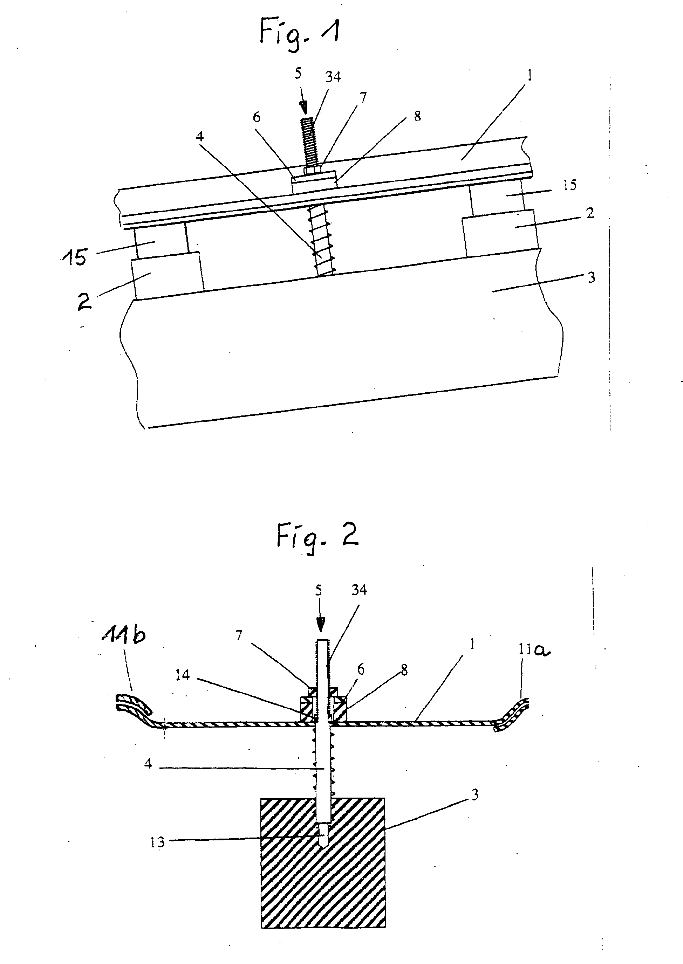

Die in den Figuren 1 - 3 dargestellte Halterung ist in ein Dach integriert, das gemäß Figur 3 Dachbalken 3 und quer dazu im parallelen Abstand verlaufende Dachlatten 2 aufweist. Auf den Dachlatten 2 liegen in überlappender Anordnung Dachziegelpfannen 1a - 1f nebeneinander und übereinander auf, wobei zwei dieser Überlappungsbereiche die Bezugszeichen 11a und 11 b tragen. Wie ferner Figur 3 zeigt, sind in der mittleren Dachziegelreihe im Bereich des Dachbalkens zwei nebeneinander liegende Dachziegel, die in Richtung quer zur Dachbalkenlängserstreckung aufeinander folgen, gegen ein einstückiges Ziegelaustauschteil 1 von im wesentlichen gleicher Flächengröße ausgetauscht worden. Das Austauschteil 1 ist an einem stiftförmigen Halteelement in Form einer Stockschraube 5 verankert, die an einer Stelle oberhalb des darunter liegenden Dachbalkens 3 das Austauschteil 1 durchdringt und in den Dachbalken eingedreht ist. Zu diesem Zweck umfasst die Stockschraube 5 einen unteren Abschnitt 4 mit Holzgewinde, während der obere mit metrischem Gewinde versehene Abschnitt 34 dieser Stockschraube 5 ein nach oben vorstehendes Kopfende bildet. Am unteren Ende des metrischen Gewindes ist eine Montagemutter 14 befestigt, an der entweder ein Schraubenschlüssel oder das in Figur 10 gezeigte Montagewerkzeug angreifen kann, um die Stockschraube 5 in den Holzbalken 3 einzudrehen. Im fertig montierten Zustand der Stockschraube 5 sitzt die Montagemutter 14 an der Oberseite des Austauschteiles 1, sodass das Holzgewinde der Stockschraube an der Durchführung durch das Austauschteil 1 in die Wandung desselben eingreifen kann und auf diese Weise eine Verankerung für das Austauschteil bei gleichzeitiger Wandungshalterung bildet.

Zum Abdichten der Stockschraube 5 ist auf ihren mit metrischem Gewinde versehenen Abschnitt 34 eine Dichtung 8, gefolgt von einer Beilagescheibe 6 und einer Mutter 7 aufgebracht, die im angezogenen Zustand die Dichtung 8 mittels der Beilagescheibe 6 gegen die Montagemutter 14 und die Oberseite des Austauschteiles 1 drückt. Diese Dichtung bildet dabei an dem nach oben vorstehenden Kopfende 34 der Stockschraube 5, an dem der zu haltende Gegenstand verankerbar ist, ein das Austauschteil 1 gegen eine Verschiebung nach oben haltendes Widerlager, dessen Funktion durch die Montagemutter 14 ergänzt werden kann.

Wie Figur 2 ferner zeigt, ist das untere Ende der Stockschraube 5 als stiftförmiger koaxialer Bohrkopf 13 ausgebildet, der mit einem gegenüber dem weiter oben liegenden Holzgewinde kleineren Gewindeaußendurchmesser versehen ist. Auf diese Weise kann die Stockschraube 5 in besonders leichter und bequemer Weise durch das Austauschteil 1 und in den Dachbalken 3 eingebohrt werden, da der Bohrkopf 13 als Vorbohrteil arbeitet.

Wenn die Montagemutter nicht am unteren Ende des metrischen Gewindes festsitzt, sondern bei eingedrehter Stockschraube in Abstand oberhalb der Oberseite des Austauschteiles festsitzt, kann direkt zwischen der Montagemutter und der Oberseite des Austauschteiles auf dem metrischen Gewinde eine Beilagescheibe, gefolgt von einer Dichtung vorgesehen sein, die mittels der Montagemutter und der Beilagescheibe gegen die Oberseite des Austauschteiles 1 angedrückt werden kann. In diesem Fall findet also nur eine einzige Mutter Verwendung, und die Beilagescheibe mit Dichtung kann bereits werkseitig auf die Stockschraube 5 aufgebracht werden. Diese Ausführungsform, die ähnlich derjenigen gemäß den Figuren 1 und 2 ist, wurde deshalb nicht extra in einer separaten Figur der Zeichnungen dargestellt.

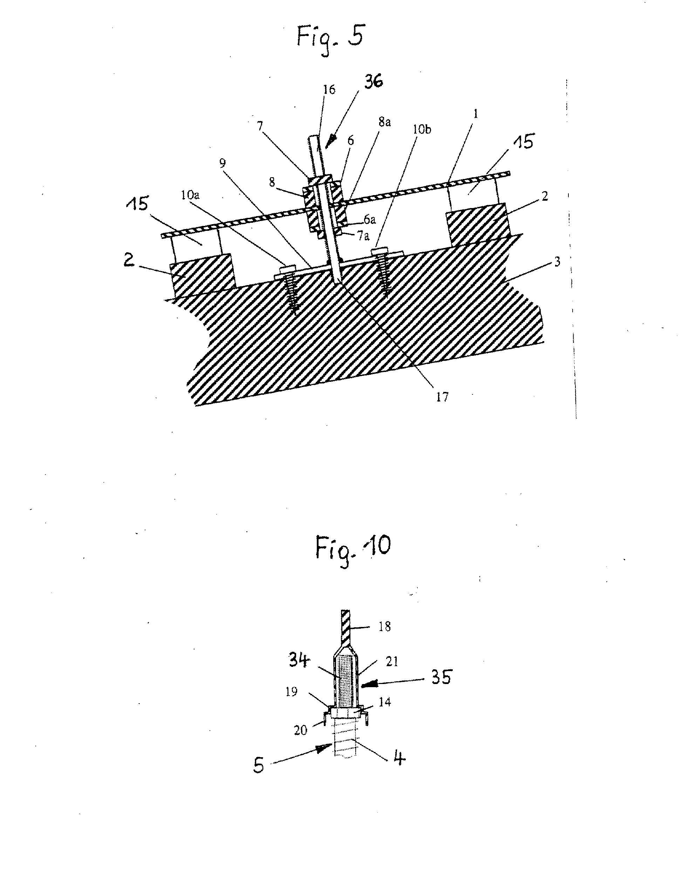

Alternativ zur Verwendung einer Stockschraube 5 kann gemäß Figur 5 auch ein Verankerungsteil 36 Verwendung finden, bei dem das stiftförmige Halteelement in Form einer Gewindestange 16 mit metrischen Gewinde an seinem unteren Ende an der einen Seite einer Grundplatte 9 im wesentlichen senkrecht zur Plattenebene befestigt ist. Die andere Plattenseite trägt koaxial zur Gewindestange 16 einen stiftförmigen Ansatz 17, der als Verlängerung der Gewindestange ausgeführt sein kann. Dieser Ansatz 17 wird bei der Montage des Verankerungsteiles 36 in eine in den Dachbalken 3 vorgebohrte Öffnung eingeschoben, welche bei vorab eingelegtem Austauschteil 1 durch dasselbe hindurch und in den Dachbalken eingearbeitet wurde. Das eingelegte Austauschteil 1 wird dann wieder entfernt, um das Verankerungsteil 36 dergestalt auf den Dachbalken 3 aufsetzen zu können, dass der Ansatz 17 in die vorher vorgebohrte Öffnung im Dachbalken eingeschoben wird. Die Grundplatte 9 wird dann mittels Befestigungsschrauben 10a und 10b am Dachbalken 3 befestigt. Das Zusammenwirken von Ansatz 17 und in den Dachbalken 3 vorgebohrter Öffnung stellt dabei sicher, dass das Austauschteil, wenn das selbe auf die Gewindestange 16 aufgeschoben wird, punktgenau seine ursprüngliche Lage erhält und in dieser exakten Position befestigt werden kann. Zur Abdichtung ist auf das nach oben vorstehende Ende der Gewindestange 16 zwischen einer aufgeschraubten Mutter 7 und der Oberseite des Austauschteiles 1 wiederum eine Beilagscheibe 6 und eine Dichtung 8 aufgebracht. Unterhalb des Austauschteiles 1 trägt die Gewindestange 16 gleichfalls eine Dichtung 8a mit Beilagescheibe 6a, wobei letztere Dichtung mittels einer weiteren, unten auf die Gewindestange 16 aufgeschraubten Mutter 7a gegen die Unterseite des Austauschteiles andrückbar ist. Während somit die obere Dichtungsanordnung 6 - 8 ein Widerlager gegen eine Verschiebung des Austauschteiles 1 nach oben bildet, übernimmt die untere Dichtungsanordnung 6a - 8a die Aufgabe eines Gegenlagers, sodass die Wandung des Austauschteiles 1 vom Druck der Dichtungen frei bleibt.

Aus der obigen Darstellung geht also hervor, dass zur Montage das Verankerungsteil 36 nach Entfernung zweier Dachziegel im Bereich eines Dachbalkens 3 in einem ersten Arbeitsschritt in die ziegelfreie Öffnung eingelegt wird. Dann wird in einem zweiten Arbeitsschritt in den Dachbalken 3 durch das eingelegte Austauschteil 1 hindurch eine Bohrung eingearbeitet, wonach das Austauschteil 1 weggenommen wird, um das Verankerungsteil 36 so auf dem Dachbalken 3 befestigen zu können, dass sein unterer Ansatz 17 in die vorgebohrte Öffnung hineinragt. Im Anschluss daran wird auf die nach oben ragende Gewindestange 16 des Verankerungsteiles 36 die untere Dichtungsanordnung 6a - 8a aufgebracht und nach Aufschieben des Austauschteiles 1 die obere Dichtungsanordnung 6-8 befestigt. Damit ist das Austauschteil 1 verankert und der Montagevorgang beendet.

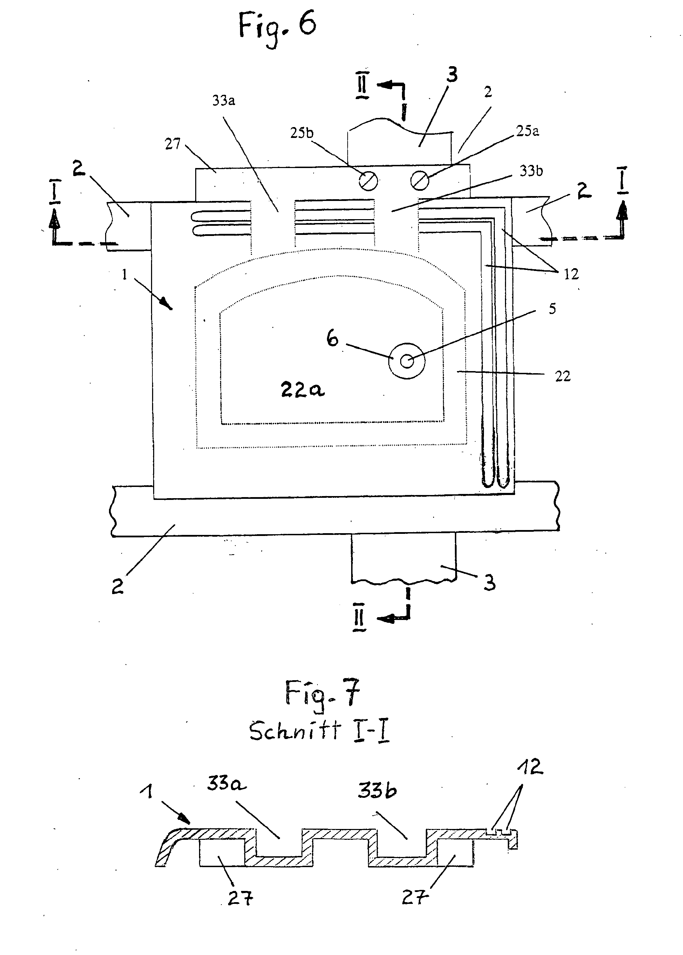

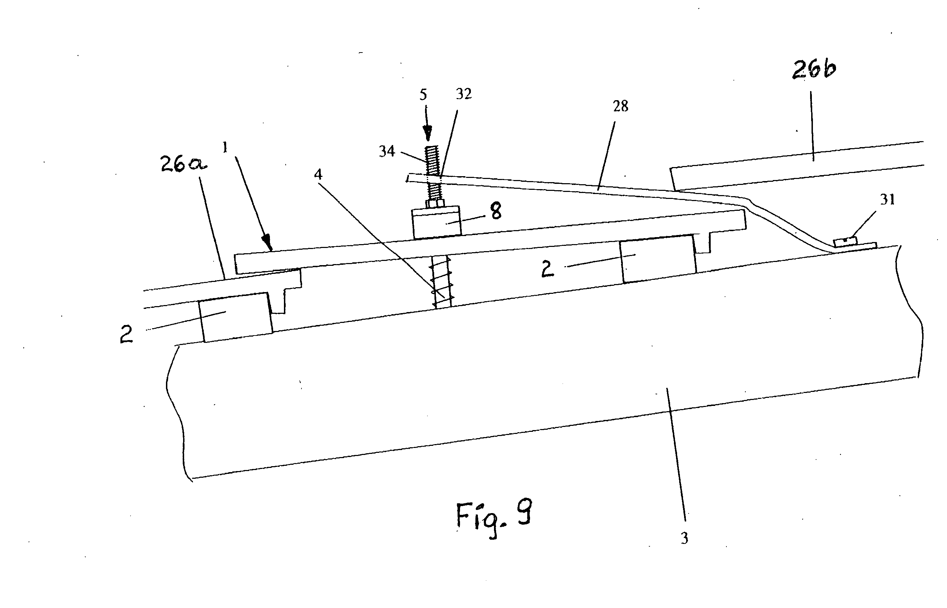

Das Austauschteil 1 kann eine im wesentlichen rechteckige oder quadratische Platte sein, die mit ihrem Rand in abdichtender Weise unter die angrenzenden Dachziegel schiebbar ist, wie dies in einer Seitenansicht andeutungsweise in Figur 9 gezeigt ist. Alternativ dazu kann das Austauschteil 1 aber auch gemäß den Figuren 6 - 8 ein Formteil mit an die Form der angrenzenden Dachziegel angepassten Randanschlusselementen 12 sein. Wie ferner diese Figuren zeigen, steht bei dem Formteil 1 in seinem mittleren Bereich dessen Wandung aus der Formteilebene nach oben vor und bildet eine mit einer ebenen Oberseite 22a versehene Auswölbung 22. Das Formteil liegt dann in seinem eingedeckten Zustand so, dass diese ebene Oberseite 22a sich oberhalb eines Dachbalkens 3 befindet, sodass das oder die stiftförmigen Halteelemente 5 durch diese ebene Oberseite hindurch in den Dachbalken 3 eingetrieben werden können. Auf diese Weise gelangen das oder die stiftförmigen Halteelemente 5 z.B. in Form einer Stockschraube an einer relativ hochgelegenen Stelle mit der Wandung der Auswölbung 22 in Eingriff, wodurch auf das oder die Halteelemente 5 einwirkenden Scherkräften entgegengewirkt wird.

Ferner weist das Formteil 1 an seinem im eingedeckten Zustand zum Dachfirst hinweisenden Rand einen vorstehenden Ansatz 27 auf, über den das Formteil 1 mit Hilfe von Befestigungsschrauben 25a und 25b zusätzlich am Dachbalken verankerbar ist. Diese zusätzliche Verankerung verstärkt den Abstützeffekt der Auswölbung 22 am oberen Ende des oder der Halteelemente 5.

Außerdem weist zur Versteifung und zum Hindurchführen hier nicht gezeigter elektrischer Anschlusskabel das Formteil 1 zwei vom Ansatz 27 in Richtung zum mittleren Bereich des Formteiles 1 hinlaufende kanalförmige Vertiefungen 33a und 33b auf. Diese Vertiefungen können an ihrem dem Ansatz 27 zugewandten Ende durch eine hier nicht weiter dargestellte Dichtung nach Außen abgedichtet werden.

Für den Fall, dass zur Verankerung für das in den Figuren 6 - 8 dargestellte Formteil 1 mit Auswölbung 22 eine Stockschraube Verwendung finden soll, eignet sich besonders eine Schraubenform, wie sie in Figur 4 dargestellt ist. Bei dieser Ausführungsform weist der mit Holzgewinde versehene Abschnitt 4 der Stockschraube 5 einen ersten oberen Gewindebereich 4a auf, der im fertig eingedrehten Zustand der Stockschraube mit der ebenen Oberseite 22a der Auswölbung 22 in Eingriff steht und der von einem gewindefreien Bereich 5a gefolgt ist, welcher in einen mit Holzgewinde gleicher Steigung versehenen und in den Dachbalken eingedrehten Endbereich 4b übergeht. Das untere Ende der Stockschraube 5 läuft in einer das Holzgewinde fortsetzenden Spitze 4c aus, die ein bequemes Eindrehen der Stockschraube in den Dachbalken 3 vorzugsweise ohne Vorbohren sicherstellt.

Um das Kopfende des oder jedes stiftförmigen Halteelementes 5 bzw. 16 zusätzlich abzustützen, ist gemäß Figur 9 ein Facheisen 28 vorgesehen, dessen eines Ende eine Bohrung 32 aufweist, mittels derselben das Flacheisen 28 auf das Kopfende des betreffenden stiftförmigen Halteelementes aufgeschoben werden kann. Wie ferner Figur 9 zeigt, ist das Flacheisen 28 zwischen dem eingedeckten Austauschteil 1 und dem darüber liegenden Dachziegel 26b nach innen hindurchgeführt, wobei das hindurchgeführte Ende des Flacheisens am Dachbalken 3 bei 31 befestigt ist. Das gezeigte Flacheisen 28 kann sowohl bei Austauschteilen 1 mit oder ohne Auswölbung 22 Anwendung finden.

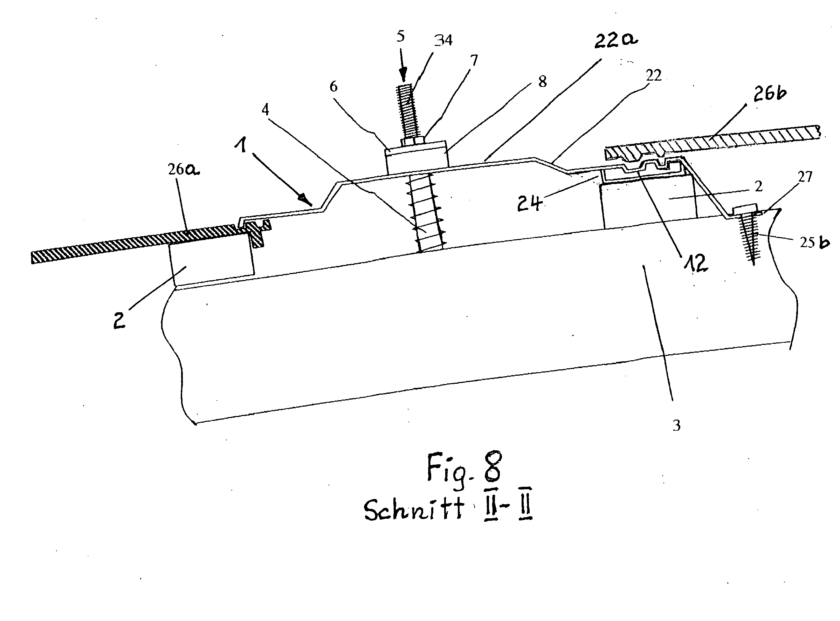

Wenn ein erfindungsgemäßes Austauschteil 1 im Vergleich zu den angrenzenden Dachziegeln eine geringere Dicke besitzt, sind unter seinem zum Dachfirst hinweisenden Rand ein oder mehrere Höhenausgleichselemente vorgesehen, mit dem oder denen das Austauschteil auf Einbauhöhe bringbar ist. Diese Höhenausgleichselemente können entweder als an der Randunterseite des Austauschteiles 1 angebrachte Abstandshalter (Bezugszeichen 24 in Figur 8) oder als eingearbeitete Randvertiefungen (Bezugszeichen 15 in Figur 1) ausgeführt sein. Derartige Höhenausgleichselemente sind allerdings unnötig, wenn das Austauschteil 1, insbesondere als Formteil, im Vergleich zu den angrenzenden Dachziegeln gleich dick ist.

Es sei in diesem Zusammenhang noch bemerkt, dass das Austauschteil 1 vorzugsweise aus Metallblech, Kunststoff, Schiefer oder Beton bestehen kann. Obwohl in den Zeichnungen der Vereinfachung wegen eine Dachverschalung nicht gezeigt ist, ist es selbstverständlich, dass der Erfindungsgegenstand auch für Dächer mit einer solchen Dachverschalung geeignet ist. In diesem Fall werden die stiftförmigen Halteelemente durch die Dachverschalung hindurch in den Dachbalken eingedreht. Auch das in der beiliegenden Figur 5 gezeigte Verankerungsteil 36 wird in diesem Fall in ähnlicher Weise befestigt. Unabhängig davon, ob eine Dachverschalung vorhanden ist oder nicht, können die hier gezeigten und unter Schutz gestellten Stockschrauben vorzugsweise ohne Vorbohren durch das eingedeckte Austauschteil 1 hindurch im Dachbalken 3 befestigt werden. Der Erfindungsgegenstand gewährleistet ferner, dass das verwendete Austauschteil aufgrund seiner guten Verankerung bei Wind - und Schnee-last weder klappern kann noch zerstört werden kann, da die Wandung des Austauschteiles direkt oder indirekt mit dem stiftförmigen Halteelement in Eingriff steht. Durch die erfindungsgemäße Größe des Austauschteiles 1 wird erreicht, dass der tragende Dachbalken 3 auch bei ungünstiger Lage immer sauber von einem mittleren oder an die Mitte angrenzenden Bereich des Austauschteiles überdeckt wird, sodass niemals - wie bei den bekannten Systemen - durch den Rand eines Dachziegels gebohrt werden muss. Bei der Ausführungsform eines Austauschteiles mit Auswölbung 22 und ebener Oberseite 22a wird gewährleistet, dass die abschließende Dichtung plan an das Austauschteil andrücken und einen wasserdichten Abschluss bilden kann.

Wie in Figur 10 dargestellt umfasst das vorzugsweise verwendete und insgesamt mit dem Bezugszeichen 35 bezeichnete Montagewerkzeug zum Eindrehen von Stockschrauben in einen Dachbalken 3 einen oberen Teil, der als Einspannschaft 18 zum Einspannen des Werkzeuges in das Bohrfutter aller gängigen Bohrmaschinen ausgebildet ist. Das untere Ende des Einspannschaftes 18 geht in ein Hohlteil 21 zum Aufnehmen des mit metrischem Gewinde versehenen oberen Abschnittes 34 einer Stockschraube 5 über, an dessen offenes unteres Ende sich über einen in im wesentlichen radialer Richtung nach außen verlaufenden Absatz ein nach unten offenes koaxiales Aufnahmeteil 19 für die Montagemutter 14 der Stockschraube 5 anschließt. Der Innenquerschnitt des Aufnahmeteiles 19 entspricht dabei dem Außenquerschnitt der Montagmutter 14. Ferner ist am Aufnahmeteil 19 ein Abstandshalter 20 vorgesehen, der in axialer Richtung gesehen über das untere Ende des Aufnahmeteiles 19 nach unten vorsteht und einen größeren Innquerschnitt gegenüber dem Innenquerschnitt des Aufnahmeteiles 19 besitzt. Dadurch wird gewährleistet, dass bei der Montage nach dem Ausklinken der Montagemutter 14 aus dem Aufnahmeteil 19 das Montagewerkzeug 35 frei dreht und die Stockschraube 5 in ihrer erreichten Eindringtiefe belässt.

## Patentansprüche

1. Halterung für Gegenstände aller Art, insbesondere von Solarmodulen oder Photovoltaikanlagen, auf Ziegeldächern, insbesondere auf mit Dachpfannenziegeln eingedeckten Dächern, **dadurch gekennzeichnet, dass** mindestens zwei im eingedeckten Zustand in Richtung quer zur Dachbalkenlängserstreckung aufeinanderfolgende Dachziegel, die im Bereich eines Dachbalkens (3) liegen, gegen ein einstückiges Ziegelaustauschteil (1) von im wesentlichen gleicher Flächengröße austauschbar sind, welches im eingedeckten Zustand an mindestens einem stiftförmigen Halteelement (5; 16) verankerbar ist, das an einer Stelle oberhalb eines darunter liegenden Dachbalkens (3) das Austauschteil (1) durchdringend am Dachbalken (3) befestigbar ist, wobei an dem von der Oberseite des Austauschteiles (1) nach oben vorstehenden Kopfende (34) des Halteelementes (5; 16), an dem der zu haltende Gegenstand verankerbar ist, ein das Austauschteil (1) gegen eine Verschiebung nach oben haltendes Widerlager (6 - 8; 14) anbringbar ist.

2. Halterung nach Anspruch 1, **dadurch gekennzeichnet, dass** als stiftförmiges Halteelement eine Stockschraube (5) vorgesehen ist, deren einer unterer Abschnitt (4) mit Holzgewinde in den Dachbalken (3) eindrehbar ist, während der obere mit metrischem Gewinde versehene Abschnitt (34) der Stockschraube (5) das nach oben vorstehende Kopfende des Halteelementes bildet und mit einer aufgeschraubten und fest mit der Stockschraube verbundenen Montagemutter (14) versehen ist, die bei der Montage zum Eindrehen der Stockschraube (5) in den Dachbalken (3) mittels eines an der Mutter ansetzbaren Montagewerkzeuges (35 in Figur 10) dient.

3. Halterung nach Anspruch 2, **dadurch gekennzeichnet, dass** das untere Ende der Stockschraube (5) entweder in einer das Holzgewinde fortsetzenden Spitze (4c in Figur 4) ausläuft oder als stiftförmiger koaxialer Bohrkopf (13 in Figur 2) mit einem gegenüber dem weiter oben liegenden Holzgewinde kleineren Gewindeaußendurchmesser ausgebildet ist.

4. Halterung nach Anspruch 2 oder 3, **dadurch gekennzeichnet, dass** bei durch das Austauschteil (1) hindurch und in den Dachbalken (3) fertig eingedrehter Stockschraube (5) deren Holzgewinde auch in die Wandung des Austauschteiles (1) eingreift.

5. Halterung nach einem oder mehreren der Ansprüche 2-4, **dadurch gekennzeichnet, dass** die Montagemutter (14 in Figur 2) am unteren Ende des metrischen Gewindes festsitzt und bei in den Dachbalken (3) fertig eingedrehter Stockschraube (5) der Oberseite des Austauschteiles (1) benachbart ist.

6. Halterung nach Anspruch 5, **dadurch gekennzeichnet, dass** zum Abdichten der Stockschraube (5) auf ihren mit metrischem Gewinde versehenen Abschnitt (34) eine Dichtung (8), gefolgt von einer Beilagescheibe (6) und einer Mutter (7), aufbringbar ist , die im angezogenen Zustand die Dichtung (8) mittels der Beilagescheibe (6) gegen die Montagemutter (14) und die Oberseite des Austauschteiles (1) drückt.

7. Halterung nach einem oder mehreren der Ansprüche 2 - 4, **dadurch gekennzeichnet, dass** die Montagemutter (14) bei durch das Austauschteil (1) hindurch und in den Dachbalken (3) fertig eingedrehter Stockschraube (5) in Abstand oberhalb der Oberseite des Austauschteiles (1) sitzt, wobei zwischen der Montagemutter (14) und der Oberseite des Austauschteiles (1) auf dem metrischen Gewinde eine Beilagescheibe (6), gefolgt von einer Dichtung (8), vorgesehen ist, die mittels der Montagemutter (14) und der Beilagescheibe (6) gegen die Oberseite des Austauschteiles (1) andrückbar ist.

8. Halterung nach Anspruch 1, **gekennzeichnet durch** ein Verankerungsteil (36 in Figur 5), bei dem das stiftförmige Halteelement (16) an seinem unteren Ende an der einen Seite einer Grundplatte (9) im wesentlichen senkrecht zur Plattenebene befestigt ist, deren andere Seite koaxial zum Halteelement einen stiftförmigen Ansatz (17) trägt, der in eine vorher in einem Arbeitsgang **durch** das vorab eingelegte Austauschteil (1) hindurch und in den Dachbalken (3) vorgebohrte Öffnung nach Entfernung des Austauschteiles (1) einschiebbar ist, bis die Grundplatte (9) auf dem Dachbalken (3) bzw. auf der vorhandenen Dachverschalung aufsitzt und in dieser Stellung an dem Dachbalken (3) befestigbar ist, wonach das Austauschteil (1) auf das stiftförmige Halteelement (16) aufschiebbar und **durch** das anschließend aufgebrachte Widerlager (6 - 8) gegen eine Verschiebung nach oben sicherbar ist.

9. Halterung nach Anspruch 8, **dadurch gekennzeichnet, dass** das stiftförmige Halteelement eine Gewindestange (16) mit metrischem Gewinde ist, auf die als Widerlager eine Mutter (7) aufschraubbar ist.

10. Halterung nach Anspruch 9, **dadurch gekennzeichnet, dass** zur Abdichtung auf die Gewindestange (16) zwischen Mutter (7) und Oberseite des Austauschteiles (1) eine Beilagscheibe (6) und eine Dichtung (8) sowie unterhalb des Austauschteiles (1) gleichfalls eine Dichtung (8a) mit Beilagscheibe (6a) aufbringbar ist, wobei letztere Dichtung (8a) mit Beilagscheibe (6a) durch eine weitere, unten auf die Gewindestange (16) aufgeschraubte Mutter (7a) gegen die Unterseite des Austauschteiles (1) andrückbar ist.

11. Halterung nach einem oder mehreren der Ansprüche 1 - 10, **dadurch gekennzeichnet, dass** das Austauschteil (1) eine im wesentlichen rechteckige oder quadratische Platte ist, die mit ihrem Rand in abdichtender Weise unter die angrenzenden Dachziegel schiebbar ist.

12. Halterung nach einem oder mehreren der Ansprüche 1-10, **dadurch gekennzeichnet, dass** das Austauschteil (1) ein Formteil mit an die Form der angrenzenden Dachziegel angepassten Randanschlusselementen (11a, 11b in Figur 2; 12 in Figur 6-8) ist.

13. Halterung nach Anspruch 12, **dadurch gekennzeichnet, dass** die Wandung des Formteiles (1) in ihrem mittleren Bereich aus der Formteilebene nach oben vorsteht und eine mit einer ebenen Oberseite (22a in Figur 8) versehene Auswölbung (22) bildet, durch die im Bereich der ebenen Oberseite (22a) das stiftförmige Halteelement (5) hindurchführbar ist, sodass dasselbe an einer relativ hoch gelegenen Stelle mit der Wandung der Auswölbung (22) in Eingriff bringbar ist.

14. Halterung nach Anspruch 12 oder 13, **dadurch gekennzeichnet, dass** das Formteil (1) an seinem im eingedeckten Zustand zum Dachfirst hinweisenden Rand einen vorstehenden und auf der Dachverschalung bzw. dem Dachbalken (3) aufliegenden Ansatz (27 in Figur 6) aufweist, über den das Formsteil (1) mittels am Ansatz (27) angreifender Befestigungselemente (25a, 25b), insbesondere mittels Befestigungsschrauben, zusätzlich am Dachbalken (3) verankerbar ist.

15. Halterung nach Anspruch 14, **dadurch gekennzeichnet, dass** zur Versteifung und zum Hindurchführen elektrischer Anschlusskabel das Formteil (1) mindestens eine, vorzugsweise zwei vom Ansatz (27) in Richtung zum mittleren Bereich des Formteiles (1) hinlaufende kanalförmige Vertiefungen (33a, 33b in Figur 6) aufweist.

16. Halterung nach Anspruch 15, **dadurch gekennzeichnet, dass** die oder jede kanalförmige Vertiefung (33a, 33b) an ihrem dem Ansatz (27) zugewandten Ende durch eine Dichtung nach außen abdichtbar ist.

17. Halterung nach einem oder mehreren der Ansprüche 13 - 16 unter Verwendung einer Stockschraube (5) als stiftförmiges Halteelement für das Formteil (1), **dadurch gekennzeichnet, dass** der mit Holzgewinde versehene Abschnitt (4) der Stockschraube (5) einen ersten oberen Gewindebereich (4a in Figur 4) aufweist, der im fertig eingedrehten Zustand der Stockschraube (5) mit der ebenen Oberseite (22a) der Auswölbung (22) in Eingriff steht und der von einem gewindefreien Bereich (5a) gefolgt ist, welcher in einen mit Holzgewinde gleicher Steigung versehenen und in den Dachbalken (3) eingedrehten Endbereich (4b, 4c) übergeht.

18. Halterung nach einem oder mehreren der Ansprüche 1 - 17, **dadurch gekennzeichnet, dass** das Kopfende des oder jedes stiftförmigen Halteelementes (5; 16) durch ein Flacheisen (28 in Figur 9) zusätzlich abstützbar ist, dessen eines Ende eine Bohrung (32) aufweist und mittels derselben auf das Kopfende aufschiebbar ist, wobei bei zwischen dem eingedeckten Austauschteil (1) und dem darüber liegenden Dachziegel (26b) nach innen hindurchgeführtem Flacheisen (28) dessen anderes Ende am Dachbalken (bei 31 in Figur 9) befestigbar ist.

19. Halterung nach einem oder mehreren der Ansprüche 11 - 18, **dadurch gekennzeichnet, dass** bei im Vergleich zu den angrenzenden Dachziegeln geringerer Dicke des Austauschteiles (1) unter seinem zum Dachfirst hinweisenden Rand ein oder mehrere Höhenausgleichselemente (15; 24) vorgesehen sind, mit dem oder denen das Austauschteil (1) auf Einbauhöhe bringbar ist.

20. Halterung nach Anspruch 19, **dadurch gekennzeichnet, dass** das oder die Höhenausgleichselemente als an der Randunterseite des Austauschteiles (1) angebrachte Abstandshalter (24 in Figur 8) oder als eingearbeitete Randvertiefungen (15 in Figur 1) ausgeführt sind.

21. Halterung nach einem oder mehreren der Ansprüche 1 - 20, **dadurch gekennzeichnet, dass** das Austauschteil (1) aus Metallblech, Kunststoff, Schiefer oder Beton besteht.

22. Austauschteil (1) wie in einem oder mehreren der Ansprüche 1 - 21 beansprucht.

23. Stockschraube (5) wie in einem oder mehreren der Ansprüche 2-7 und 17 beansprucht.

24. Verankerungsteil (36) wie in einem oder mehreren der Ansprüche 8 - 10 beansprucht.

25. Montagewerkzeug (35) wie im Anspruch 2 beansprucht, dessen oberer Teil als Einspannschaft (18 in Figur 10) zum Einspannen des Werkzeuges in das Bohrfutter aller gängigen Bohrmaschinen ausgebildet ist, wobei das untere Ende des Einspannschaftes in ein Hohlteil (21) zum Aufnehmen des mit metrischem Gewinde versehenen oberen Abschnittes (34) der Stockschraube (5) übergeht, an dessem offenen unteren Ende sich über einen in im wesentlichen radialer Richtung nach außen verlaufenden Absatz ein nach unten offenes koaxiales Aufnahmeteil (19) für die Montagemutter (14) anschließt, dessen Innenquerschnitt dem Außenquerschnitt der Montagemutter (14) entspricht und das mit einem Abstandshalter (20) versehen ist, der in axialer Richtung gesehen über das untere Ende des Aufnahmeteiles (19) nach unten vorsteht und einen größeren Innenquerschnitt gegenüber den Innenquerschnitt des Aufnahmeteiles (19) besitzt, sodass bei der Montage nach dem Ausklinken der Montagemutter (14) aus dem Aufnahmeteil (19) das Montagewerkzeug (35) frei dreht und die Stockschraube (5) in ihrer erreichten Eindringtiefe belässt.
